Europäisches Patentamt

European Patent Office

Office européen des brevets

(19)

(11) Veröffentlichungsnummer: **0 289 652 B1**

# EUROPÄISCHE PATENTSCHRIFT

(12)

(45) Veröffentlichungstag der Patentschrift: **04.03.92**

(51) Int. Cl.⁵: **A23B  4/02**

(21) Anmeldenummer: **87115243.5**

(22) Anmeldetag: **19.10.87**

Die Akte enthält technische Angaben, die nach dem Eingang der Anmeldung eingereicht wurden und die nicht in dieser Patentschrift enthalten sind.

(54) **Verfahren zum Herstellen von Kochschinken, insbesondere Folienschinken.**

(30) Priorität: **18.04.87 DE 3713211**

(43) Veröffentlichungstag der Anmeldung:
**09.11.88 Patentblatt  88/45**

(45) Bekanntmachung des Hinweises auf die Patenterteilung:
**04.03.92 Patentblatt  92/10**

(84) Benannte Vertragsstaaten:
**BE CH DE FR GB IT LI NL**

(56) Entgegenhaltungen:
**EP-A- 0 053 781      WO-A-82/01640
DE-A- 2 712 237      DE-A- 3 002 636
FR-A- 2 180 072      FR-A- 2 357 182**

**Fachkunde für Fleischhauer und Fleischselcher, Schwarz/Topol, Wien 1950, Seiten 244/245**

(73) Patentinhaber: **Ludwig Scheid GmbH Zusatzstoffe und Gewürze für die Fleischverarbeitung
Clasenweg 6
W-6636 Überherrn (Saar)(DE)**

(72) Erfinder: **Der Erfinder hat auf seine Nennung verzichtet**

(74) Vertreter: **Bernhardt, Winfrid, Dr.-Ing.
Kobenhüttenweg 43
W-6600 Saarbrücken(DE)**

**Beschreibung**

Die Erfindung betrifft ein Verfahren zum Herstellen von Kochschinken, bei dem eine Salz und ggf. Zusatzstoffe enthaltende Lake in das Fleisch eingebracht wird und das Fleisch schließlich nach einem Evakuieren unter Pressung gegart wird und bei dem weitere Maßnahmen zum Binden des Wassers und Bilden einer Kittsubstanz in dem Fleisch getroffen werden.

Die Erfindung betrifft ferner ein Verfahren zum Herstellen von Folienschinken, bei dem vor einer länger, aber mit geringerer Krafteinwirkung als das Quetschen erfolgenden mechanischen Bearbeitung des Fleisches eine Salz und ggf. Zusatzstoffe enthaltende Lake in das Fleisch eingebracht wird und das Fleisch schließlich nach einem Evakuieren unter Pressung in einer Schrumpffolie gegart wird und bei dem weitere Maßnahmen zum Binden des Wassers und Bilden einer Kittsubstanz in dem Fleisch getroffen werden.

Zur Herstellung von Kochschinken in fleischverarbeitenden Betrieben kennt man die Verfahrensweise, vor oder nach dem Quetschen des Fleisches eine Salz- und Zusatzstoffe, wie Rötungsmittel, enthaltende Lake mittels einer Vielzahl von Injektionsnadeln in das Fleisch einzuspritzen, das Fleisch später zu poltern (in einer drehenden Trommel, meist "tumblen" genannt) oder zu massieren (in einem feststehenden Behälter mittels einer Art Rührwerkzeug) und es schließlich, wenn die Lake durch das Poltern oder Massieren verteilt worden ist und eine Quellung eingetreten ist, zu kochen. Statt die Lake einzuspritzen, kann man sie auch durch das Massieren einbringen.

Aus der EP-A-0 053 781 ist es bekannt, Fleisch vor oder nach Injizieren von Pökellake zu quetschen und dann einer mit geringerer Krafteinwirkung als das Quetschen erfolgenden mechanischen Behandlung unter Kühlung zu unterziehen, nämlich einem durch Schütteln verstärkten Poltern. In der DE-A-27 12 237 ist ein Massieren von gepökeltem Fleisch, insbesondere Kochschinken, in einer gekühlten, unbewegten Trommel vorgeschlagen, in der das Fleisch mittels eines Rührwerks durch Erhöhung der Umdrehungszahl und/oder Vergrößerung der Schaufel- oder Mitnehmeroberfläche einer verstärkten mechanischen Behandlung unterzogen werden soll, bevor es dann gekocht wird.

Folienschinken wird in einer dichten, evakuierten Schrumpffolienpackung, die ihn allseitig preßt, gegart und bleibt dann darin. Er ist monatelang haltbar. Unerläßlich ist bisher jedoch für die Herstellung von Folienschinken eine Zugabe von Phosphaten, um das Wasser in dem Fleisch zu binden und eine Kittsubstanz bilden zu lassen. Sonst verliert der Schinken an bestimmten Stellen den inneren Zusammenhalt, und es entstehen dort Räume mit Wasseransammlungen. Ein solcher Schinken zerfällt beim Aufschneiden. Er ist nicht verkäuflich.

Für den Bedarf in der Bundesrepublik Deutschland läßt sich unter diesen Umständen bisher kein Folienschinken herstellen. Denn hier ist die Zugabe von Phosphaten nicht zugelassen.

Der Erfindung liegt die Aufgabe zugrunde, in einer lebensmittelrechtlich zulässigen Weise eine verbesserte Wasserbindung und Kittsubstanzbildung in Kochschinken, auch in Folienschinken, zu erzielen, die zu einem möglichst vergleichbar dichten und festen Erzeugnis führt.

Gemäß der Erfindung wird dieser Zweck bei einem Verfahren der ersten eingangs bezeichneten Art dadurch erfüllt, daß zum weiteren Binden des Wassers und Bilden der Kittsubstanz das Fleisch vor dem Einbringen der Lake einer länger, aber mit geringerer Krafteinwirkung als das Quetschen erfolgenden mechanischen Bearbeitung unterzogen wird.
Bei einem Verfahren der zweiten eingangs genannten Art wird es dadurch erfüllt, daß das Fleisch der dort genannten mechanischen Bearbeitung gegenüber bloßem Poltern oder Massieren verstärkt und unter Kühlung unterzogen wird.

Es erweist sich, daß durch die nach dem ersten Verfahren vorgesehene Bearbeitung des Fleisches vor dem Einbringen der Lake auf mechanischem Wege ein Aufschluß des Gewebes erreicht wird, der mit seiner Auswirkung auf die Wasserbindung und Kittsubstanzbildung im Fleisch dem Eiweißaufschluß durch die Phosphate mindestens weitgehend gleichkommt. Außerdem ergibt die gelockerte Muskelstruktur die Vorteile, daß das Fleisch verarbeitungsfreundlicher wird und der durch die Pressung ausgeübte Druck sich in dem Fleisch ähnlich wie in einer Flüssigkeit allseitig fortsetzt und verteilt.

Strikt zu unterscheiden ist, daß diese erfindungsgemäße Bearbeitung, obwohl sie äußerlich die gleiche ist wie die zuerst erwähnte bekannte Bearbeitung nach dem Einbringen der Lake, im Gegensatz zu dieser vor dem Einbringen der Lake stattfinden muß.

Es bringt auch ein gegebenenfalls vor dem Einbringen der Lake durchgeführtes Quetschen des Fleisches die gewünschte Wirkung nicht hervor. Das Quetschen führt zu Überdehnungen und mit dem bloßen Auge sichtbaren Zerreißungen des Fleisches. Die nach der Erfindung vorgesehenen Zerstörungen oder sonstigen Änderungen sind im wesentlichen mikroskopischen Ausmaßes.

Von den derzeit üblichen Verfahren der Bearbeitung kommen, wie schon gesagt, vor allem das Poltern in einer drehenden Trommel und das Massieren in einem feststehenden Behälter mittels einer Art Rührwerkzeug in Betracht. Denkbar ist jedoch jegliches in vergleichbarer Weise nicht mit großen Kräften schnell und stark zerstörende, sondern vornehmlich innerhalb der Zellstruktur sich auswirkende Verfahren. In derartigem Rahmen kommen auch künftige Entwicklungen in Frage.

Die nach dem zweiten Verfahren speziell für Folienschinken zum weiteren Binden des Wassers und Bilden der Kittsubstanz vorgesehene an sich bekannte mechanische Bearbeitung nach dem Einbringen der Lake verstärkt und unter Kühlung ist, wie überraschend gefunden wurde, geeignet, die bei der schwierigen Herstellung von Folienschinken bisher für unumgänglich gehaltene Zugabe von Phosphaten zu ersetzen.

Die verstärkte - wohlgemerkt vom Quetschen weit entfernte - Bearbeitung kann ein Poltern unter Verwendung mindestens eines, vorzugsweise gezackten, Schlagkörpers sein, z.B. wie er in der DE-A-35 27 575 beschrieben und gezeichnet ist.

Sie wird zweckmäßigerweise in einer gekühlten Trommel durchgeführt. Derartige Vorrichtungen sind bekannt. Wo keine solche Vorrichtung zur Verfügung steht, kann man eine normale Poltervorrichtung in eine Kühlkammer stellen. Dann sollte allerdings die Bearbeitung mit Unterbrechungen stattfinden, weil es sonst dennoch zu unerwünschter Erwärmung des Fleisches kommen kann, unter der es seine Wasserbindefähigkeit verliert.

So ist es auch vorteilhaft, bei der Bearbeitung vor dem Einbringen der Lake zu kühlen.

Die Dauer der Bearbeitungen vor und/oder nach dem Einbringen der Lake insgesamt beträgt beispielsweise 7 bis 9 Std., vorzugsweise 6 bis 8 Std.. Vorzugsweise wird das Fleisch trocken bearbeitet. Möglich wäre jedoch auch eine Bearbeitung mit Wasser, allerdings nicht mit Lake.

Das Einbringen der Lake erfolgt vorzugsweise durch Einspritzen.

Im Falle eines vor dem Einbringen der Lake durchgeführten Quetschens wird man das Poltern oder Massieren erst nach dem Quetschen durchführen. An bereits gemürbtem Fleisch ist das Quetschen weniger wirksam.

Die Garung in einer Schrumpffolie als Vakuumbehältnis und zugleich selbsttätige Preßform ist auch vorteilhaft, wenn der Kochschinken dann nicht langfristig als Folienschinken darin verbleiben soll.

Es ist jedoch auch möglich und weniger aufwendig, den Schinken ohne Folienpackung bei niedriger Temperatur, möglichst um den Gefrierpunkt, zu evakuieren und dann, beispielsweise in einem Netz oder einer Kochschinkenform, zu garen.

**Patentansprüche**

1. Verfahren zum Herstellen von Kochschinken, bei dem eine Salz und ggf. Zusatzstoffe enthaltende Lake in das Fleisch eingebracht wird und das Fleisch schließlich nach einem Evakuieren unter Pressung gegart wird und bei dem weitere Maßnahmen zum Binden des Wassers und Bilden einer Kittsubstanz in dem Fleisch getroffen werden,
dadurch gekennzeichnet,
daß zum weiteren Binden des Wassers und Bilden der Kittsubstanz das Fleisch vor dem Einbringen der Lake einer länger, aber mit geringerer Krafteinwirkung als das Quetschen erfolgenden mechanischen Bearbeitung unterzogen wird.

2. Verfahren zum Herstellen von Folienschinken, bei dem vor einer länger, aber mit geringerer Krafteinwirkung als das Quetschen erfolgenden mechanischen Bearbeitung des Fleisches eine Salz und ggf. Zusatzstoffe enthaltende Lake in das Fleisch eingebracht wird und das Fleisch schließlich nach einem Evakuieren unter Pressung in einer Schrumpffolie gegart wird und bei dem weitere Maßnahmen zum Binden des Wassers und Bilden einer Kittsubstanz in dem Fleisch getroffen werden,
dadurch gekennzeichnet,
daß zum weiteren Binden des Wassers und Bilden der Kittsubstanz das Fleisch der mechanischen Bearbeitung gegenüber bloßem Poltern oder Massieren verstärkt und unter Kühlung unterzogen wird.

3. Verfahren nach Anspruch 2,
dadurch gekennzeichnet,
daß außerdem das Fleisch vor dem Einbringen der Lake einer länger, aber mit geringerer Krafteinwirkung als das Quetschen erfolgenden mechanischen Bearbeitung unterzogen wird.

4. Verfahren nach Anspruch 1 oder 3,
dadurch gekennzeichnet,
daß die vor dem Einbringen der Lake mit der geringeren Krafteinwirkung erfolgende Bearbeitung ein Poltern oder Massieren ist.

5. Verfahren nach einem der Ansprüche 2 bis 4,
dadurch gekennzeichnet,
daß die nach dem Einbringen der Lake mit der geringeren Krafteinwirkung verstärkt erfolgende Bearbeitung ein Poltern unter Verwendung mindestens eines, vorzugsweise gezackten, Schlagkörpers ist.

6. Verfahren nach einem der Ansprüche 1 oder 3 bis 5,
dadurch gekennzeichnet,
daß die vor dem Einbringen der Lake mit der geringeren Krafteinwirkung erfolgende Bearbeitung unter Kühlung durchgeführt wird.

7. Verfahren nach einem der Ansprüche 1 bis 6,
dadurch gekennzeichnet,
daß das Einbringen der Lake vor oder nach einem Quetschen des Fleisches erfolgt.

8. Verfahren nach Anspruch 7,
dadurch gekennzeichnet,
daß die vor dem Einbringen der Lake mit der geringeren Krafteinwirkung erfolgende Bearbeitung im Falle des vor dem Einbringen der Lake durchgeführten Quetschens nach diesem durchgeführt wird.

9. Verfahren nach einem der Ansprüche 1 bis 8,
dadurch gekennzeichnet,
daß die vor und/oder nach dem Einbringen der Lake mit der geringeren Krafteinwirkung erfolgende(n) Bearbeitung(en) insgesamt 7 bis 9 Std., vorzugsweise 6 bis 8 Std., durchgeführt wird bzw. werden.

10. Verfahren nach einem der Ansprüche 1 oder 4 bis 9,
dadurch gekennzeichnet,
daß der Kochschinken als Folienschinken hergestellt wird.

**Claims**

1. Process for the production of cooked ham in which a salt based curing brine, possibly including extra additives or admixtures, is introduced into the meat, which is then cooked or boiled after evacuation of the air and under compression. Further measures are then carried out to bind the moisture and introduce a filling compound into the meat,

characterised by

subjecting the meat to a mechanical procedure which uses less force than squeezing or pressing to improve the process of the further binding of the water and formation of the filling compound prior to treatment with the brine.

2. Process for the production of ham in plastic packaging in which a salt based pickling brine, possibly containing extra additives or admixtures is introduced into the meat, prior to it being subjected to a lengthy mechanical procedure using less force than squeezing or pressing. The ham is then cooked after evacuation of the air and under compression in a film, during which further measures are undertaken to bind the moisture and introduce a filling compound into the meat,

characterised by

a process to bind the moisture still further and introduce the filling substance during which the meat is mechanically operated on at reduced temperature in a procedure which consists of a more vigorous process than beating or kneading.

3. Process according to claim 2,

characterised by

subjecting the meat to a lengthy mechanical procedure which uses less force than squeezing or pressing prior to the introduction of the brine.

4. Process according to claim 1 or 3,

characterised by

subjecting the meat to a beating and kneading process using little mechanical force prior to the introduction of the brine.

5. Process according to one of claims 2 to 4,

characterised by

carrying out the brine process with the low force level mechanical procedure, followed by a more forceful beating method using at least one, preferably serrated edged, instrument.

6. Process according to one of claims 1 or 3 to 5,

characterised by carrying out the low force level mechanical process at reduced temperature prior to the introduction of the brine.

7. Process according to one of claims 1 to 6,

characterised by

pressing or squeezing the meat either before or after the introduction of the brine.

8. Process according to claim 7,

characterised by

the case of the meat having been pressed or squeezed before the introduction of the brine. Under these circumstances the low force mechanical procedure should be applied subsequent to the pressing or squeezing procedure and be followed by the introduction of the brine.

9. Process according to one of claims 1 to 8,

characterised by

that the procedures before, during or after the introduction of the brine shall be carried out for a period of 7 to 9 or if preferred 6 to 8 hours.

10. Process according to one of claims 1 or 4 to 9,

characterised by

producing the ham in plastic packaging.

**Revendications**

1. Procédé pour la fabrication de jambon cuit, par lequel une saumure contenant du sel et le cas échéant des additifs est rentrée dans la viande, et la viande est cuite après une évacuation sous pressurage, et dans laquelle d'autres mesures pour la rétention de l'eau et la formation d'une substance de mastic dans la viande sont prises,
caractérisé par le fait que
pour la rétention d'eau additionnelle et la formation de la substance de mastic, la viande est soumise plus longuement à un travail mécanique, mais à une action de force plus faible que l'écrasement.

2. Procédé pour la fabrication de jambon sous film, dans lequel avant un travail mécanique de la viande, toutefois avec une action de force plus faible que l'écrasement, une saumure contenant du sel et le cas échéant des additifs est introduite dans la viande, et la viande après évacuation sous pression est cuite sous film retractable et dans lequel d'autres mesures pour la rétention d'eau et la formation d'une substance de mastic dans la viande sont prises,
caractérisé par le fait que
pour accentuer la rétenion d'eau et la formation d'une substance de mastic, la viande est contrairement au barattage ou massage, soumise de façon plus intense à une action mécanique sous réfrigération.

3. Procédé suivant revendication 2
caractérisé par le fait que
la viande est soumise, à part cela et avant de rentrer la saumure, à une action mécanique, plus longue, toutefois avec une action de force plus faible que l'écraement.

4. Procédé suivant revendication 1 et 3.
caractérisé par le fait que
l,action effectuée avant la rentrée (injection) de saumure et avec une plus faible intensité est, un barattage ou un massage,

5. Procédé suivant revendication 2 et 4
caractérisé par le fait que
l'action effectuée après la rentrée de saumure et avec une intensité plus faible est un barattage renforcé avec l'aide d'au moins un corps de percussion de préférence dentelé.

6. Procédé suivant une des revendication 1 ou 3 à 5
caractérisé par le fait que
l'action effectuée avant la rentrée de saumure avec une intensité plus faible est effectuée sous réfrigération.

7. Procédé suivant une des revendication 1 à 6
caractérisé par le fait que
la rentrée de saumure se fait avant ou après un écrasement.

8. Procédé suivant revendication 7
caractérisé par le fait que
l'action effectuée avant la rentrée de saumure avec la faible intensité mécanique dans le cas où l'écrasement est réalisé avant la rentrée de saumure est dans ce cas effectué après.

9. Procédé suivant une des revendications 1 à 8
caractérisé par le fait que
l'(les) action(s) effectuée(s) avant ou après la rentrée de saumure avec la faible intensité sont faites au total entre 7 et 9 heures mais de préférence 6 à 8 heures.

10. Procédé suivant une des revendications 1 ou 4 à 9
caractérisé par le fait que
le jambon cuit est fabriqué comme jambon sous film.